# EUROPEAN PATENT SPECIFICATION

(11) **EP 2 921 926 B1**
(45) Date of publication and mention of the grant of the patent: **04.01.2017**
(21) Application number: 14000970.5
(22) Date of filing: 16.03.2014
(51) Int. Cl.: G05D 23/19

(54) **Control system and method**
Steuerungssystem und Verfahren
Système et procédé de commande

(43) Date of publication of application: 23.09.2015
(73) Proprietor: Opti Automation Oy, 02130 Espoo (FI)
(72) Inventor: Seppä, Jyri, 02300 Espoo (FI); Juha, Marjeta, 02780 Espoo (FI)
(74) Representative: Suominen, Kaisa Liisa

(56) References cited:
- GB-A- 2 501 765
- US-A- 5 927 599
- US-A1- 2006 111 816
- US-A1- 2012 271 460

## Description

### TECHNICAL FIELD

The present disclosure relates generally to electrical heating appliances; and more specifically, to control systems for controlling electrical heating appliances in houses, and similar types of buildings. Moreover, the present disclosure relates to methods of using control systems for controlling electrical heating appliances in houses, and similar types of buildings. Furthermore, the present disclosure relates to software products stored on non-transient machine-readable data storage media, wherein the software products are executable upon computing hardware for implementing aforesaid methods on aforesaid control systems.

### BACKGROUND

Electric heating is typically implemented with one or more heating appliances that are positioned underneath windows of a given room or in a close proximity to windows and/or doors of the given room. A typical heating appliance has an in-built thermostat that is used to control a temperature of the heating appliance.

One problem that often arises, particularly when an outdoor environmental temperature is low, is that a temperature in a proximity of the heating appliance might rise to a sufficiently high level, for example, such as 20 degrees Centigrade, but a temperature in a remainder of the given room remains at a relatively low level, for example, such as in a range of 15 to 18 degrees Centigrade.

In order to address this problem, users often adjust the thermostat of the heating appliance to a much higher level, for example, such as 28 degrees Centigrade, to obtain a temperature of approximately 20 degrees Centigrade in the remainder of the given room. As a result, the temperature in the proximity of the heating appliance rises to 28 degrees Centigrade, while the temperature in the remainder of the given room rises to 20 degrees Centigrade.

Now, consider a situation in which the outdoor environment temperature rises. As the thermostat of the heating appliance is still adjusted at 28 degrees Centigrade, the heating appliance continues to heat the room. This leads to a situation where the temperature rises in the entire room, and the room is over-heated. This also results in an inefficient use of electrical energy.

There are conventional heating systems which employ centrally controlled temperature control, and so forth. A problem which is encountered in pratice is that if an associated central control system breaks, batteries of heating elements in the heating system can attain unsuitable and/or dangerous temperatures.

Document GB 2501765 discloses an apparatus to control a central heating system comprising a relay coupled to the system, a thermostat in wireless communication with the relay and a server located remotely from the system, i.e. in a separate building. Document US 5,927,599 provides for a wireless air conditioning control system, wherein a thermostat assembly measures ambient temperature, compares it with predetermined target temperature and transmits air conditioning request signals to an air conditioning control assembly.

However, the conventional system suffers from several disadvantages. Firstly, the user has to adjust manually desired temperatures in the thermostat of the heating appliance and the temperature sensor. This may lead to unnecessary confusion. Secondly, an incorrect control of the heating appliance can result in an undesirable situation arising, for example, from low temperatures that can result in freezing, or from excessively high temperatures that can represent a fire risk. Thirdly, the incorrect control of the heating appliance also results in an inefficient use of energy. Fourthly, in an event that the central control unit fails to work properly, the conventional system may not be able to maintain the desired temperature within the given room. This may lead to freezing, for example, in situations where outdoor environment temperatures drop considerably below the freezing point of water.

Therefore, there exists a need for an improved control system for controlling heating appliances in houses.

### SUMMARY

The invention is defined by independent claims 1, 7 and 13.

The present disclosure seeks to provide an improved control system for controlling household appliances, for example, in an event that a control arrangement for the household appliances fails and/or is interrupted.

Moreover, the present disclosure seeks to provide an improved method of using a control system for controlling household appliances, for example, in an event that a control arrangement for the household appliances fails and/or is interrupted.

In one aspect, embodiments of the present disclosure provide a control system for controlling one or more electrical heating appliances in one or more houses. The control system includes a server arrangement that is spatially remote from the one or more houses. The server arrangement is coupled via a communication network to at least one controller unit of the one or more houses.

Optionally, the server arrangement is operable to calculate one or more control limits for determining when to turn off electricity to at least one of the one or more heating appliances. Optionally, these control limits are calculated based on at least one of: a user set target temperature, a house/room related mathematical model, and/or an outdoor environment temperature.

Moreover, the one or more heating appliances are provided with an autonomous control that is utilized in an event that the one or more heating appliances fail to receive communications and/or instructions from their at least one controller unit during a set time period after last receiving communications and/or instructions.

Optionally, the autonomous control is operable to turn on electricity to at least one of the one or more heating appliances to prevent freezing from occurring.

Moreover, optionally, default settings of the one or more heating appliances are user-definable. These default settings may, for example, pertain to when the one or more heating appliances are operating in an autonomous manner.

Accordingly, the server arrangement is optionally operable to interface via one or more user interfaces to one or more users for enabling the one or more users to control the one or more heating appliances in a remote manner.

Furthermore, in some implementations, the server arrangement is cloud-based.

In another aspect, embodiments of the present disclosure provide a method of using the control system for controlling the electrical heating appliances in the houses.

In yet another aspect, embodiments of the present disclosure provide a software product recorded on non-transient (non-transitory) machine-readable data storage media, wherein the software product is executable upon computing hardware for implementing the aforementioned method on the aforementioned control system.

Embodiments of the present disclosure substantially eliminate or at least partially address the aforementioned problems in the prior art; and facilitate an autonomous control of heating appliances in an event that any component of a control system is not working; and enable users to control the heating appliances in a remote manner.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- Fig. 1: is a schematic illustration of a control system for controlling one or more heating appliances in one or more houses, in accordance with an embodiment of the present disclosure;
- Fig. 2: is a schematic illustration of an example implementation of the control system, in accordance with an embodiment of the present disclosure;
- Fig. 3: is a schematic illustration of an electrical circuit of a heating appliance and its controlling relay for use in the control system, in accordance with an embodiment of the present disclosure;
- Fig. 4: is a schematic illustration of an electrical circuit of the controlling relay, in accordance with an embodiment of the present disclosure; and
- Fig. 5: is an illustration of steps of a method of using the control system for controlling one or more heating appliances in one or more houses, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although the best mode of carrying out the present disclosure has been disclosed, those skilled in the art would recognize that other embodiments for carrying out or practicing the present disclosure are also possible.

Embodiments of the present disclosure provide a control system for controlling one or more electrical heating appliances in one or more houses. The control system includes a server arrangement that is spatially remote from the one or more houses. The server arrangement is coupled via a communication network to at least one controller unit of the one or more houses.

Optionally, the server arrangement is operable to calculate one or more control limits for determining when to turn off electricity to at least one of the one or more heating appliances. Optionally, these control limits are calculated based on at least one of: a user set target temperature, a house/room related mathematical model, and/or an outdoor environment temperature.

Moreover, the one or more heating appliances are provided with an autonomous control that is utilized in an event that the one or more heating appliances fail to receive communications and/or instructions from their at least one controller unit during a set time period after last receiving communications and/or instructions.

Optionally, the autonomous control is operable to turn on electricity to at least one of the one or more heating appliances to prevent freezing from occurring.

Moreover, optionally, default settings of the one or more heating appliances are user-definable. These default settings may, for example, pertain to when the one or more heating appliances are operating in an autonomous manner.

Accordingly, the server arrangement is optionally operable to interface via one or more user interfaces to one or more users for enabling the one or more users to control the one or more heating appliances in a remote manner.

Furthermore, in some implementations, the server arrangement is cloud-based.

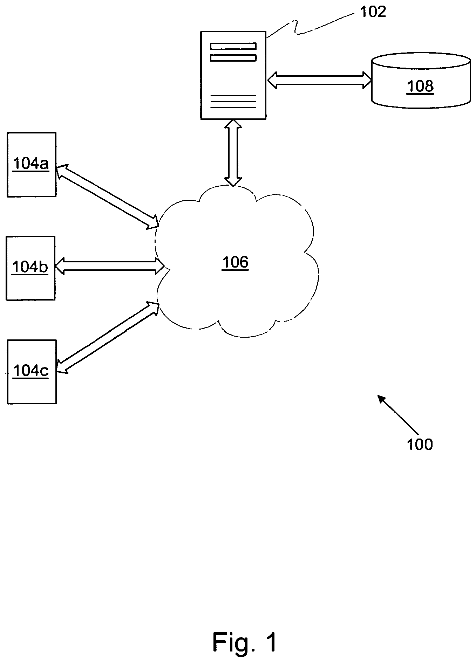

Referring now to the drawings, particularly by their reference numbers, Fig. 1 is a schematic illustration of a control system **100** for controlling one or more heating appliances in one or more houses, in accordance with an embodiment of the present disclosure. The control system **100** includes a server arrangement **102** that is spatially remote from the one or more houses. The control system **100** includes one or more controller units, depicted as controller units **104a, 104b** and **104c** in Fig. 1 (hereinafter collectively referred to as controller units **104**).

Each of the controller units **104** is installed in its respective house from amongst the one or more houses.

The server arrangement **102** is coupled via a communication network **106** to at least one of the controller units **104,** as shown in Fig. 1.

The control system **100** also includes one or more databases, depicted as a database **108** in Fig. 1. The database **108** is optionally associated with the server arrangement **102.**

The control system **100** may be implemented in various ways, depending on various possible scenarios. In one example, the control system **100** may be implemented by way of a spatially collocated arrangement of the server arrangement **102** and the database **108.** In another example, the control system **100** may be implemented by way of a spatially distributed arrangement of the server arrangement **102** and the database **108** coupled mutually in communication via a communication network, such as the communication network **106.** In yet another example, the server arrangement **102** and the database **108** may be implemented via cloud-based computing services.

The communication network **106** couples the server arrangement **102** to the controller units **104,** and provides a communication medium between the server arrangement **102** and the controller units **104** for exchanging data amongst themselves. It may be noted here that the controller units **104** may be coupled to the server arrangement **102** periodically or randomly.

The communication network **106** can be a collection of individual networks, interconnected with each other and functioning as a single large network. Such individual networks may be wired, wireless, or a combination thereof. Examples of such individual networks include, but are not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, satellite-based telecommunication networks, and Worldwide Interoperability for Microwave Access (WiMAX) networks.

In some examples, each of the controller units **104** may be implemented by way of a computing device that includes computing hardware, which is operable to execute one or more software products recorded on non-transient (non-transitory) machine-readable data storage media, pursuant to embodiments of the present disclosure. Examples of such computing devices include, but are not limited to, mobile phones, smart telephones, Mobile Internet Devices (MIDs), tablet computers, Ultra-Mobile Personal Computers (UMPCs), phablet computers, Personal Digital Assistants (PDAs), web pads, Personal Computers (PCs), handheld PCs, laptop computers, desktop computers, large-sized touch screens with embedded PCs, and other interactive devices, such as Television (TV) sets and Set-Top Boxes (STBs). In a preferred embodiment, the controller unit **104** is an embedded computing device.

Optionally, the server arrangement **102** is operable to calculate one or more control limits for determining when to turn off electricity to at least one of the one or more heating appliances in the one or more houses. Optionally, these control limits are calculated based on at least one of: a user set target temperature, a house/room related mathematical model, and/or an outdoor environmental temperature.

Moreover, the one or more heating appliances are provided with an autonomous control that is utilized in an event that the one or more heating appliances fail to receive communications and/or instructions from their respective controller units **104** during a set time period after last receiving communications and/or instructions.

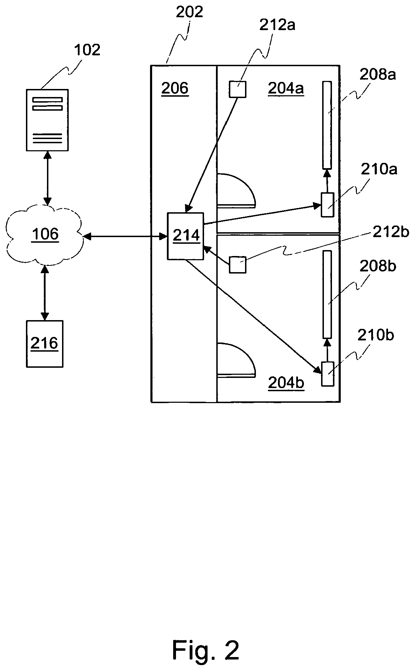

Optionally, the autonomous control is operable to turn on electricity to at least one of the one or more heating appliances to prevent freezing from occurring. More details of how the control system **100** functions will next be described below in conjunction with Fig. 2.

Moreover, optionally, default settings of the one or more heating appliances are user-definable. These default settings may, for example, pertain to when the one or more heating appliances are to operate in an autonomous manner.

Beneficially, the default settings of the one or more heating appliances are optionally stored in the database **108.** Additionally or alternatively, the default settings of the one or more heating appliances are optionally stored in their respective controller units **104.**

Accordingly, the server arrangement **102** is optionally operable to interface via one or more user interfaces to one or more users for enabling the one or more users to control the one or more heating appliances in a remote manner.

Fig. 1 is merely an example, which should not unduly limit the scope of the claims herein. It is to be understood that the specific designation for the control system **100** is provided as an example and is not to be construed as limiting the control system **100** to specific numbers, types, or arrangements of controller units, server arrangements, and databases. A person skilled in the art will recognize many variations, alternatives, and modifications of embodiments of the present disclosure.

Fig. 2 is a schematic illustration of an example implementation of the control system **100,** in accordance with an embodiment of the present disclosure. The example implementation has been provided with reference to a house **202,** as shown in Fig. 2.

Fig. 2 presents a schematic illustration of an interior of the house **202.** The house **202** includes rooms **204a** and **204b** adjacent to a hallway **206,** as shown in Fig. 2.

With reference to Fig. 2, heating appliances **208a** and **208b** are installed in the rooms **204a** and **204b,** respectively. The heating appliances **208a** and **208b** are hereinafter collectively referred to as heating appliances **208,** while the rooms **204a** and **204b** are hereinafter collectively referred to as rooms **204.** The heating appliances **208** can be any type of electrical heaters. In some examples, the heating appliances **208** include heaters and/or radiators installed near corresponding windows of the rooms **204.** In other examples, the heating appliances **208** include ceiling heaters with infra-red heating installed on ceilings of the rooms **204.** In yet other examples, the heating appliances **208** include floor heaters installed on floors of the rooms **204.**

The control system **100** includes one or more controlling relays, depicted as controlling relays **210a** and **210b** in Fig. 2 (hereinafter collectively referred to as controlling relays **210),** one or more temperature sensors, depicted as temperature sensors **212a** and **212b** in Fig. 2 (hereinafter collectively referred to as temperature sensors **212),** and a controller unit **214.** In an alternative embodiment, there are optionally more than one controller unit **214** in a house. In an alternative embodiment, the heating appliance **208** includes a controlling relay **210.** In some embodiments, sensors **212** are optionally also included for measuring other physical parameters, such as humidity in addition to temperature.

The controller unit **214** is optionally implemented in a manner that is similar to the implementation of the controller units **104.** Thus, the controller unit **214** may be implemented by way of a computing device that includes computing hardware, which is operable to execute one or more software products recorded on non-transient (non-transitory) machine-readable data storage media, pursuant to embodiments of the present disclosure. Examples of such computing devices include, but are not limited to, mobile phones, smart telephones, MIDs, tablet computers, UMPCs, phablet computers, PDAs, web pads, PCs, handheld PCs, laptop computers, desktop computers, large-sized touch screens with embedded PCs, and other interactive devices, such as TV sets and STBs. In preferred embodiment, the controller unit **104** is an embedded computing device.

With reference to Fig. 2, the controller unit **214** is installed in the hallway **206.** It will be appreciated here that the controller unit **214** is optionally installed at any suitable position in the interior or an exterior of the house **202.**

Moreover, the controlling relays **210** are electrically coupled to their corresponding heating appliances **208,** and are communicably coupled to the controller unit **214.** The controlling relays **210a** and **210b** are operable to switch the heating appliances **208a** and **208b** on/off, respectively. Communication between the controlling relays **210** and the controller unit **214** can be wired or wireless.

Moreover, the temperature sensors **212a** and **212b** are installed in the rooms **204a** and **204b,** respectively, as shown in Fig. 2. The temperature sensors **212** are beneficially installed away from the heating appliances **208.** This potentially enables the temperature sensors **212** to measure temperatures inside the rooms **204** more accurately.

Optionally, the temperature sensors **212** are communicably coupled to the controller unit **214.** The temperature sensors **212** are operable to send the measured temperatures to the controller unit **214.**

Upon receiving the measured temperatures, the controller unit **214** is optionally operable to associate time stamps with the measured temperatures. This potentially allows the control system **100** to analyze variations in room temperatures as a function of time.

Moreover, the controller unit **214** is communicably coupled to the server arrangement **102** via the communication network **106,** as shown in Fig. 2. Thus, the controller unit **214** is operable to send the measured temperatures to the server arrangement **102.**

Subsequently, the server arrangement **102** is operable to calculate one or more control limits for determining when to turn off electricity to the heating appliances **208** in the house **202.**

Optionally, the control limits corresponding to the heating appliances **208a** and **208b** are independent of each other. Thus, the control limits define when to turn off electricity to individual heating appliances **208a** and **208b** in the house **202.** This beneficially allows different users, who reside in their respective rooms **204a** and **204b,** to set different target temperatures for the heating appliances **208a** and **208b,** respectively.

In order to calculate the control limits, the server arrangement **102** is optionally operable to use a mathematical model related to the house **202** and/or individual rooms **204a** and **204b** (hereinafter referred to as house/room related mathematical model). Optionally, the house/room related mathematical model takes into account one or more of:
(i) a user set target temperature for each of the rooms **204;**
(ii) an outdoor environment temperature; and/or
(iii) an individual heat capacity or a thermal insulation capability of each of the rooms **204.**

Optionally, the control system **100** can be configured to measure the outdoor environment temperature. The control system **100** optionally includes one or more temperature sensors, installed outside the house **202,** for measuring the outdoor environment temperature. These temperature sensors are optionally coupled to the controller unit **214.** These temperature sensors are optionally operable to send the measured outdoor environment temperature to the controller unit **214,** which is optionally operable to send the measured outdoor environment temperature to the server arrangement **102.**

Additionally or alternatively, the server arrangement **102** can be configured to receive outdoor environmental information from a weather service that is external to the control system **100.** The outdoor environment information beneficially includes the outdoor environment temperature, and optionally other weather conditions such as wind, sun, rain and so forth, of a geographical location where the house **202** is built. Additionally, the outdoor environmental information optionally includes future predicted temperatures and other weather conditions.

Moreover, the server arrangement **102** is optionally operable to estimate the heat capacity of the rooms **204** and/or the thermal insulation capability of the rooms **204** from an analysis of past records of time taken to heat up or cool down the rooms **204,** when the heating appliances **208** were switched on or off. Additionally, potential output powers of the heating appliances **208** can be taken in consideration in the estimation. Let us consider an example situation in which the room **204a** is provided with good thermal insulation, while the room **204b** is provided with poor thermal insulation. As a result, the room **204a** might take a longer time to cool down as compared to the room **204b,** after both the heating appliances **208a** and **208b** are switched off. Additionally, in the past records, the time taken to heat up or cool down the rooms **204** is optionally recorded as a function of room temperatures and outdoor environment temperatures. Let us consider another example situation in which the outdoor environmental temperatures are low, for example, such as below a freezing point of water. In this example situation, the rooms **204** might take a short time to cool down after the heating appliances **208** are switched off.

Furthermore, once the control limits are calculated, the server arrangement **102** is operable to send instructions to the controller unit **214.** These instructions optionally include the calculated control limits, and therefore, define when to turn off electricity to the heating appliances **208** in the house **202.**

Subsequently, the controller unit **214** is operable to send the instructions to the controlling relays **210,** which are then operable to control the heating appliances **208,** as per the instructions received from the server arrangement **102.**

Moreover, the controller unit **214** is optionally operable to receive the instructions from the server arrangement **102** and/or send the instructions to the controlling relays **210** either periodically or randomly.

Optionally, the controller unit **214** is operable to store the control limits pertaining to the rooms **204.** More optionally, the controller unit **214** is operable to update the control limits from time to time, for example, when new control limits and/or new instructions are fetched or received from the server arrangement **102.**

Moreover, the control system **100** optionally allows a user device **216** associated with a user to accesses various services provided by the server arrangement **102.** The user device **216** is beneficially coupled to the server arrangement **102,** for example, via the communication network **106,** as shown in Fig. 2.

In an example, the server arrangement **102** optionally enables the user associated with the house **202** to perform one or more of:
(i) define default settings of the heating appliances **208;**
(ii) change individual target temperatures for the rooms **204;** and/or
(iii) control the heating appliances **208** in a remote manner.

These default settings may, for example, pertain to when the heating appliances **208** are operating in an autonomous manner. Beneficially, the default settings of the heating appliances **208** are optionally stored in the database **108** and/or the controller unit **214.** Additionally or alternatively, the default settings of the heating appliances **208a** and **208b** are optionally stored in the controlling relays **210a** and **210b,** respectively.

In order to access the various services provided by the server arrangement **102,** the user device **216** optionally employs a software product that provides a user interface to the user associated with the user device **216.** The software product may be a native software application, a software application running on a browser, or a plug-in application provided by a website, such as a social networking website. Optionally, the user interface is beneficially an interactive Graphical User Interface (GUI).

Beneficially, the user device **216** may be implemented using a portable computing device that includes computing hardware, which is operable to execute the aforementioned software product. Typical examples of the portable computing device include, but are not limited to, a mobile phone, a smart telephone, an MID, a tablet computer, a UMPC, a phablet computer, a PDA, a web pad, a handheld PC, and a laptop computer. Additionally, the user device **216** is optionally implemented with desktop computers, large-sized touch screens with embedded PC's, and other interactive devices, such as TV sets and set top boxes (STB's).

Furthermore, the heating appliances **208** are provided with an autonomous control that is utilized in an event that the controlling relays **210** connected to the heating appliances **208** fail to receive communications and/or instructions from the controller unit **214** during a set time period after last receiving communications and/or instructions. The set time period could be either user-defined or system-defined by default. The set time period may, for example, be 5 minutes, 10 minutes, 30 minutes, 5 days, 10 days, one week, two weeks, and so on.

Optionally, the autonomous control is operable to turn on electricity to the heating appliances **208,** if it is apparent that any component of the control system **100** is not working. This potentially prevents freezing from occurring, for example, in situations where outdoor environment temperatures drop below the freezing point of water.

The autonomous control is beneficially facilitated by the controlling relays **210** and the controller unit **214.** Some example scenarios pertaining to the control system **100** are provided in a table below. For illustration purposes only, the examples scenarios have been provided with reference to the heating appliance **208a,** the controlling relay **210a** and the temperature sensor **212a.**

| Example Scenario | Action Taken under Autonomous Control |
|---|---|
| 1. The controlling relay **210a** has not received communications and/or instructions from the controller unit **214,** during the set time period. | The controlling relay **210a** turns on electricity to the heating appliance **208a.** |
| 2. The controller unit **214** has not received the measured temperature from the temperature sensor **212a,** during last 'X' minutes. Here, 'X' can be any number predefined in the control system **100.** | As there is uncertainty about the temperature inside the room **204a,** the controller unit **214** sends a command to the controlling relay **210a** to turn on electricity to the heating appliance **208a.** |
| 3. The controller unit **214** has not received communications and/or instructions from the server arrangement **102,** during last 'Y' days. Here, 'Y' can be any number predefined in the control system **100.** | The controller unit **214** utilizes communications and/or instructions received from the server arrangement **102** in recent past. Accordingly, the controller unit **214** is optionally configured to repeat these instructions, if the controller unit **214** is unable to communicate with the server arrangement **102.** |
| | Alternatively, the controller unit **214** sends a command to the controlling relays **210** to turn on electricity to the heating appliances **208.** |
| | Additionally, the controller unit **214** is optionally configured to notify a user that the controller unit **214** is unable to communicate with the server arrangement **102.** Optionally, a notification can be provided using a display screen of the controller unit **214.** Additionally or alternatively, the notification can be provided by sending a message to the user device **216.** |
| 4. The server arrangement **102** has not received any input from the user device **216,** during last 'Z' days. Here, 'Z' can be any number predefined in the control system **100.** | The control system **100** optionally utilizes inputs received from the user device **216** in recent past. |
| | Alternatively, the controller unit **214** sends a command to the controlling relays **210** to turn on electricity to the heating appliances **208.** |
| | Additionally, the control system **100** optionally requests the user to provide instructions from time to time, for example, by sending a message to the user device **216.** |

Fig. 2 is merely an example, which should not unduly limit the scope of the claims herein. It is to be understood that the example implementation of the control system **100** is not to be construed as limiting the control system **100 to** specific numbers, types, or arrangements of controller units, heating appliances, controlling relays, temperature sensors, and rooms. A person skilled in the art will recognize many variations, alternatives, and modifications of embodiments of the present disclosure.

Moreover, the control system **100** can be implemented for any number of houses or groups of houses in a manner that is similar to the example implementation provided in conjunction with Fig. 2. It is to be noted here that the term "house" is not limited to residential purposes only; the term "house" refers to residential, leisure and commercial buildings, throughout the present disclosure.

Moreover, it is to be noted here that the control system **100** is not limited to controlling heating appliances only. In some implementations, the control system **100** could be used to control other household appliances, for example heat pumps, pumps coupled to district heating systems, pumps coupled to geothermal facilities, actuators for deploying solar energy collectors, and so froth.

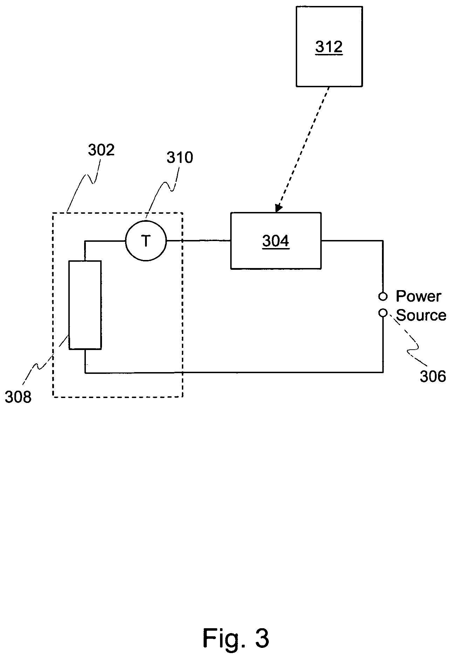

Fig. 3 is a schematic illustration of an electrical circuit of a heating appliance **302** and its controlling relay **304** for use in the control system **100,** in accordance with an embodiment of the present disclosure. The controlling relay **304** is electrically coupled to the heating appliance **302,** as shown in Fig. 3.

A power source **306** supplies electrical power to the heating appliance **302** and the controlling relay **304,** as shown in Fig. 2. The power source **306** is optionally an Alternating Current (AC) power source, such as 230 volts (V) AC power source.

The heating appliance **302** includes a heating element **308** and a thermostat **310.** The thermostat **310** is optionally located within a housing of the heating appliance **302,** and is typically a part of the heating appliance **302.** More optionally, the thermostat **310** is permanently fixed to the heating appliance **302.**

The thermostat **310** optionally enables a user to adjust a desired temperature manually. Optionally, a minimum threshold temperature is defined below the desired temperature, while a maximum threshold temperature is defined above the desired temperature. Typically, the thermostat **310** turns on electricity to the heating element **308,** when the temperature falls below the minimum threshold temperature, and turns off electricity to the heating element **308,** when the temperature rises above the maximum threshold temperature. In other words, the thermostat **310** works as an autonomous unit to control the heating element **308.**

The controlling relay **304** is communicably coupled to a controller unit **312.** Optionally, the controlling relay **304** includes a wireless interface (not shown in Fig. 3) that enables communication between the controlling relay **304** and the controller unit **312.**

Moreover, the controller unit **312** is optionally implemented in a manner that is similar to the implementation of the controller units **104** and/or the controller unit **214,** as described earlier in conjunction with Figs. 1 and 2.

Furthermore, the controlling relay **304** includes a relay that turns on/off electricity to the heating appliance **302.** In other words, the controlling relay **304** controls supply of electricity to the heating appliance **302.** If the controlling relay **304** turns off electricity to the heating appliance **302,** the thermostat **310** does not receive electricity. Consequently, the heating appliance **302** does not turn on.

Optionally, the thermostat **310** beneficially operates independently of the controlling relay **304.** If the controlling relay **304** turns on electricity to the heating appliance **302** and the thermostat **310** turns off electricity to the heating element **308,** the heating appliance **302** does not turn on. Thus, the heating appliance **302** turns on only when both the controlling relay **304** and the thermostat **310** turn on electricity.

Optionally, the controlling relay **304** is retrofitted to the heating appliance **302.** Alternatively, optionally, the controlling relay **304** is built-in to the heating appliance **302.**

Optionally, the controlling relay is retrofitted before, namely preceding, the thermostat **310,** as shown in Fig. 3. In a case where the heating appliance **302** is a floor heater, the controlling relay **304** is optionally retrofitted either before the thermostat **310** or between the thermostat **310** and the heating element **308.** In this manner, the controlling relay **304** is optionally added on to existing installations between a mains power supply and heating appliances.

Moreover, the controlling relay **304** is optionally configured to facilitate an autonomous control that is utilized in an event that the controlling relay **304** of the heating appliance **302** fails to receive communications and/or instructions from the controller unit **312** during a set time period after last receiving communications and/or instructions. The set time period is optionally either user-defined or system-defined by default. The set time period may, for example, be 5 minutes, 10 minutes, 30 minutes, 5 days, 10 days, one week, two weeks, and so on.

Optionally, the autonomous control is operable to turn on electricity to the heating appliance **302,** if it is apparent that any component of the control system **100,** including the controller unit **312,** is not working. This potentially prevents freezing from occurring, for example, in situations where outdoor environment temperatures drop below the freezing point of water. In this way, a failure of the controller unit **312** or the control system **100** does not cause problems, such as excessive cooling of rooms or houses.

It is to be appreciated that, when the controlling relay **304** turns on electricity to the heating appliance **302,** temperature control is achieved by the thermostat **310** or other local temperature sensor of the heating appliance **302.**

Fig. 3 is merely an example, which should not unduly limit the scope of the claims herein. A person skilled in the art will recognize many variations, alternatives, and modifications of embodiments of the present disclosure.

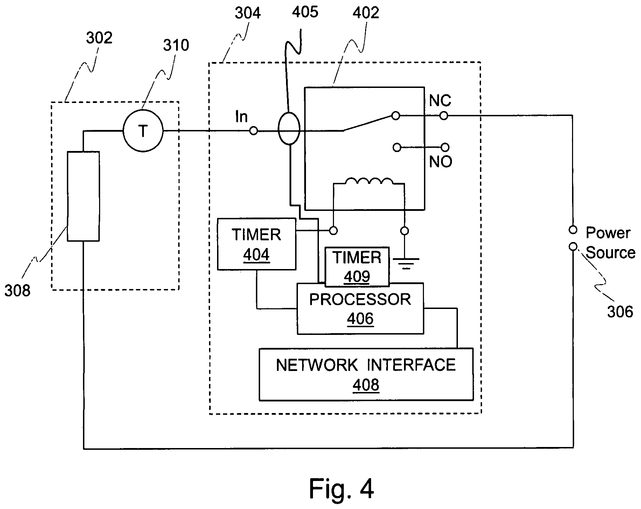

Fig. 4 is a schematic illustration of an electrical circuit of the controlling relay **304,** in accordance with an embodiment of the present disclosure. The controlling relay **304** includes a relay **402.** The relay **402** may, for example, be a mechanical relay or a solid-state relay. In an alternative or additional embodiment, the relay **402** is optionally a controller that can be used to turn electricity on fully ON or OFF or to any value therebetween.

The relay **402** is turned on by default, namely, electricity flows from a Normally-Closed (NC) contact to an Input (In) contact that provides electricity to the heating appliance **302,** as shown in Fig. 4.

The controlling relay **304** optionally includes timers **404** and **409,** a processor **406,** measurement loop **405** and a network interface **408.** The timer **404** and **409,** measurement loop **405** and the network interface **408** are operatively coupled to the processor **406.** Measurement loop 405 can refer to any means of measuring electricity current and or voltage.

The timer **404** is coupled to the relay **402** via an electrical contact with a ground connection, as shown in Fig. 4. The relay **402** is controlled by a signal derived from the timer **404.** The timer **404** is turned on/off and refreshed by commands received from the processor **406.**

In an example situation in which the timer **404** does not receive any command from the processor **406** within a predefined time limit, the timer **404** stops providing the signal to the relay **402.** As a result, the relay **402** remains turned on by default. In an alternative or additional embodiment, the timer **404** functionality is implemented within the processor **406.**

Moreover, the timer **409** is beneficially used to measure the time limit. The timer **409** is optionally implemented within the processor **406,** or it can be a separate timer circuit.

Additionally or alternatively, the control relay **304** can include a measurement loop **405.** The measurement loop **405** can be used to measure whether current flows via the relay **402** to the heating appliance **302** or not. The measured information can be used to determine if the relay **402** is operational or not, or to determine whether the heating appliance **302** receives electrical power or not. If, based on system setup and current temperatures, the heating appliance should receive electricity (namely, the room temperature is below set thresholds, the relay **402** is switched to conducting stage and the thermostate **310** should be in ON stage), but the measurement loop **405** does not detect current, an error/fault message is optionally generated and communicated via a network interface **408.** An alert can correspondingly be generated and communicated to one or more users.

Moreover, the processor **406** receives communications and/or instructions from the controller unit **312** using the network interface **408.** The network interface **408** is optionally a wireless interface.

Moreover, the network interface **408** optionally allows the controlling relay **304** to communicate with the controller unit **312** and/or other controlling relays under the controller unit **312,** for example, via a communication network. The communication network may, for example, be a collection of individual networks, interconnected with each other and functioning as a single large network. Such individual networks may be wired, wireless, or a combination thereof. Examples of such individual networks include, but are not limited to, LANs, WANs, MANs, WLANs, WWANs, WMANs, 2G telecommunication networks, 3G telecommunication networks, 4G telecommunication networks, satellite-based telecommunication networks, and WiMAX networks. Additionally or alternatively, the controlling relay **304** may also use its own "Bluetooth" network, and connect to a "Bluetooth" server, to communicate with the controller unit **312** and/or the other controlling relays under the controller unit **312.** "Bluetooth" is a registered trademark.

Alternatively, the timer **404** can be implemented as a functionality of the processor **406.** Moreover, the processor can be configured to control the relay **304** directly.

Fig. 4 is merely an example, which should not unduly limit the scope of the claims herein. A person skilled in the art will recognize many variations, alternatives, and modifications of embodiments of the present disclosure.

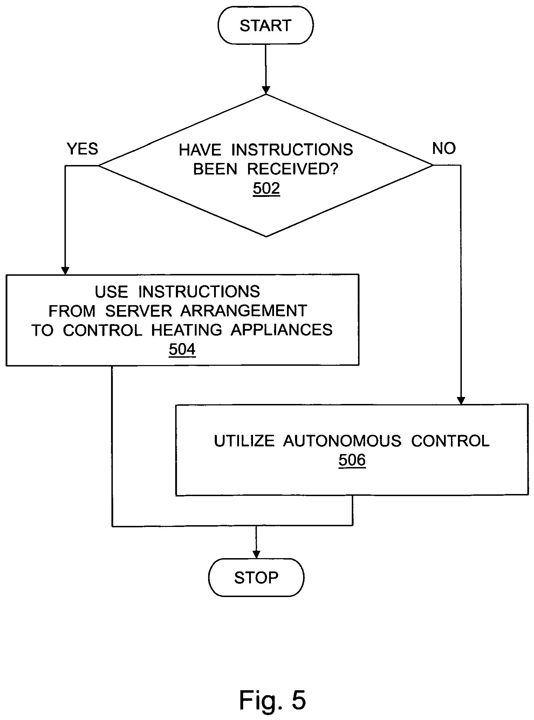

Fig. 5 is an illustration of steps of a method of using the control system **100** for controlling one or more heating appliances in one or more houses, in accordance with an embodiment of the present disclosure. The method is depicted as a collection of steps in a logical flow diagram, which represents a sequence of steps that can be implemented in hardware, software, or a combination thereof.

For illustration purposes only, the method has been illustrated with reference to the example implementation of the control system **100** as described in conjunction with Fig. 2.

At a step **502,** the controller unit **214** checks whether or not communications and/or instructions have been received from the server arrangement **102.**

If, at the step **502,** it is found that communications and/or instructions have been received from the server arrangement **102,** a step **504** is performed. Otherwise, if it is found that no communication and/or instructions have been received, a step **506** is performed.

At the step **504,** the controller unit **214** uses the communications and/or instructions received from the server arrangement **102** to control the heating appliances **208.** In accordance with the step **504,** the controller unit **214** sends the instructions to the controlling relays **210,** which then turn on/off electricity to the heating appliances **208** as per the instructions.

At the step **506,** the autonomous control is utilized, as described in the example scenarios earlier. In accordance with the step **506,** the autonomous control turns on electricity to the heating appliances **208,** if it is apparent that any component of the control system **100** is not working. This potentially prevents freezing from occurring, for example, in situations where outdoor environment temperatures drop below the freezing point of water.

The step **506** is beneficially facilitated by the controlling relays **210** and the controller unit **214,** as described earlier.

The steps **502** to **506** are only illustrative and other alternatives can also be provided where one or more steps are added, one or more steps are removed, or one or more steps are provided in a different sequence without departing from the scope of the claims herein.

Embodiments of the present disclosure provide a software product recorded on non-transient machine-readable data storage media, wherein the software product is executable upon computing hardware for implementing the method as described in conjunction with Fig. 5 on the control system **100.**

Embodiments of the present disclosure are susceptible to being used for various purposes, including, though not limited to, facilitating an autonomous control of heating appliances in an event that any component of a control system is not working; and enabling users to control the heating appliances in a remote manner.

In an alternative embodiment, a control system can be used to control flow of water in water-based heating systems, such as floor heating or water based radiator, or similar. In such systems, water based radiator are convenientky controlled by utilizing one or more remotely-controllable flow valves. In a possible error situation, the one or more flow valve would turn ON, following substantially similar logic as in examples regarding electrical supply as described in the foregoing.

Optionally, the system **100** is employed in combination with a smart electrical supply grid for providing dynamic demand correction for load balancing the smart electrical supply grid. In such a situation, control of electrical heaters is made, at least in part, dependent upon a magnitude and/or a frequency of an alternating electric power supply provided to the system **100.**

Further one example system includes a central control unit and one or more temperature sensors installed in one or more rooms. A given room is provided with a temperature sensor, which is located far away from a heating appliance installed within the given room. This enables the temperature sensor to measure an actual temperature of the given room. The system allows a user to adjust a thermostat of a heating appliance to 28 degrees Centigrade, and the temperature sensor to 20 degrees Centigrade. Now, when an outdoor environmental temperature rises, the temperature of the given room starts to rise. The temperature sensor then senses an increase in the temperature, and sends corresponding information to the central control unit, which, in turn, turns off the heating appliance for a while.

Modifications to embodiments of the present disclosure described in the foregoing are possible without departing from the scope of the present disclosure as defined by the accompanying claims. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A control system for controlling one or more electrical heating appliances (208a, 208b, 302) in one or more houses (202), wherein
the control system includes a server arrangement (102) that is spatially remote from the one or more houses (202), wherein the server arrangement is coupled via a communication network (106) to at least one controller unit (214, 312) of the one or more houses (202),
**characterized in that** the one or more heating appliances (208a, 208b, 302) are provided with an autonomous control (310) that is utilized in an event that one or more controlling relays (210a, 210b, 304) of the heating appliances fail to receive communications and/or instructions from their at least one controller unit (214, 312) during a set time period after last receiving communications and/or instructions.

2. A control system as claimed in claim 1, **characterized in that** the server arrangement (102) is operable to interface via one or more user interfaces to one or more users for enabling the one or more users to control the one or more heating appliances in a remote manner.

3. A control system as claimed in claim 1 or 2, **characterized in that** default settings of the one or more heating appliances (208a, 208b, 208c) are user-definable, wherein the default settings pertain to when the one or more heating appliances are operating in an autonomous manner.

4. A control system as claimed in claim 1, 2 or 3, **characterized in that** the autonomous control (310) is operable to turn on electricity to at least one of the one or more heating appliances (208a, 208b, 208c) to prevent freezing from occurring.

5. A control system as claimed in claim 1, 2, 3 or 4, **characterized in that** the server arrangement (102) is operable to calculate one or more control limits based on at least one of: a user set target temperature, a house/room related mathematical model, and/or an outdoor environmental temperature and/or a prediction of the outdoor environment temperature, for determining when to turn off electricity to at least one of the one or more heating appliances (208a, 208b, 208c).

6. A control system as claimed in claim 5, **characterized in that** the server arrangement (102) is cloud-based.

7. A method of using a control system for controlling one or more electrical heating appliances (208a, 208b, 208c) in one or more houses (202), wherein the method includes:
(a) using a server arrangement (102) of the control system to control the one or more heating appliances (208a, 208b, 208c), wherein the server arrangement (102) is spatially remote from the one or more houses (202), wherein the server arrangement (102) is coupled via a communication network (106) to at least one controller unit (214, 312) of the one or more houses (202); and
is **characterized in that**
(b) using an autonomous control (310) of the one or more heating appliances (208a, 208b, 208c) in an event that one or more controlling relays (210a, 210b, 210c) of the heating appliances (208a, 208b, 304) fail to receive communications and/or instructions from their at least one controller unit (214, 312) during a set time period after last receiving communications and/or instructions.

8. A method as claimed in claim 7, **characterized in that** the method includes operating the server arrangement (102) to interface via one or more user interfaces to one or more users for enabling the one or more users to control the one or more heating appliances (208a, 208b, 208c) in a remote manner.

9. A method as claimed in claim 7 or 8, **characterized in that** default settings of the one or more heating appliances (208a, 208b, 208c) are user-definable, wherein the default settings pertain to when the one or more heating appliances (208a, 208b, 208c) are operating in an autonomous manner.

10. A method as claimed in claim 7, 8 or 9, **characterized in that** the method includes operating the autonomous control (310) to turn on electricity to at least one of the one or more heating appliances (208a, 208b, 208c) to prevent freezing from occurring.

11. A method as claimed in claim 7, 8, 9 or 10, **characterized in that** the method includes operating the server arrangement (102) to calculate one or more control limits based on at least one of: a user set target temperature, a house/room related mathematical model, and/or an outdoor environment temperature, for determining when to turn off electricity to at least one of the one or more heating appliances (208a, 208b, 208c).

12. A method as claimed in claim 11, **characterized in that** the server arrangement (102) is cloud-based.

13. A software product recorded on non-transitory machine-readable data storage media, **characterized in that** the software product is executable upon computing hardware for implementing a method as claimed in claim 7 on a control system as claimed in claim 1.

## Patentansprüche

1. Steuerungssystem zum Steuern von einer oder mehreren elektrischen Heizungen (208a, 208b, 302) in einem oder mehreren Häusern (202), wobei das Steuerungssystem eine Serveranordnung (102) aufweist, die sich in einer räumlichen Entfernung zu dem einen oder den mehreren Häusern (202) befindet, wobei die Serveranordnung über ein Datenübertragungsnetz (106) mit mindestens einer Steuereinheit (214, 312) des einen oder der mehreren Häuser (202) verbunden ist,
**dadurch gekennzeichnet, dass** die eine oder mehreren Heizungen (208a, 208b, 302) mit einer autonomen Regelung (310) versehen sind, die in dem Fall eingesetzt wird, dass ein oder mehrere Steuerrelais (210a, 210b, 304) der Heizungen keine Mitteilungen und/oder Anweisungen von ihrer mindestens einen Steuereinheit (214, 312) während eines festgesetzten Zeitraums nach dem letzten Empfang von Mitteilungen und/oder Anweisungen empfängt bzw. empfangen.

2. Steuerungssystem nach Anspruch 1, **dadurch gekennzeichnet, dass** die Serveranordnung (102) so betreibbar ist, dass sie über eine oder mehrere Benutzerschnittstellen mit einem oder mehreren Benutzern in Kontakt tritt, damit der eine oder die mehreren Benutzer die eine oder mehreren Heizungen fernsteuern kann bzw. können.

3. Steuerungssystem nach Anspruch 1 oder 2, **dadurch gekennzeichnet, dass** Voreinstellungen der einen oder mehreren Heizungen (208a, 208b, 208c) benutzerdefinierbar sind, wobei die Voreinstellungen den Fall betreffen, wenn die eine oder mehreren Heizungen autonom arbeiten.

4. Steuerungssystem nach Anspruch 1, 2 oder 3, **dadurch gekennzeichnet, dass** die autonome Regelung (310) so einsetzbar ist, dass mindestens eine der einen oder mehreren Heizungen (208a, 208b, 208c) mit Strom versorgt wird, damit sie nicht einfriert.

5. Steuerungssystem nach Anspruch 1, 2, 3 oder 4, **dadurch gekennzeichnet, dass** die Serveranordnung (102) so betreibbar ist, dass sie ein oder mehrere Steuerungsgrenzwerte anhand von Folgendem berechnet: eine vom Benutzer eingestellte Solltemperatur, ein haus-/raumbezogenes mathematisches Modell und/oder eine Außenumgebungstemperatur und/oder eine Vorhersage der Außenumgebungstemperatur, damit festgelegt wird, wann mindestens eine der einen oder mehreren Heizungen (208a, 208b, 208c) vom Strom getrennt werden soll bzw. sollen.

6. Steuerungssystem nach Anspruch 5, **dadurch gekennzeichnet, dass** die Serveranordnung (102) cloudbasiert ist.

7. Verfahren zum Verwenden eines Steuerungssystems zum Steuern von einer oder mehreren elektrischen Heizungen (208a, 208b, 208c) in einem oder mehreren Häusern (202), wobei das Verfahren Folgendes umfasst:
(a) Verwenden einer Serveranordnung (102) des Steuerungssystems zum Steuern der einen oder mehreren Heizungen (208a, 208b, 208c), wobei sich die Serveranordnung (102) in einer räumlichen Entfernung zu dem einen oder den mehreren Häusern (202) befindet, wobei die Serveranordnung (102) über ein Datenübertragungsnetz (106) mit mindestens einer Steuereinheit (214, 312) des einen oder der mehreren Häuser (202) verbunden ist; und
**dadurch gekennzeichnet ist, dass**
(b) eine autonome Regelung (310) der einen oder mehreren Heizungen (208a, 208b, 208c) in dem Fall eingesetzt wird, dass ein oder mehrere Steuerrelais (210a, 210b, 210c) der Heizungen (208a, 208b, 304) keine Mitteilungen und/oder Anweisungen von ihrer mindestens einen Steuereinheit (214, 312) während eines festgesetzten Zeitraums nach dem letzten Empfang von Mitteilungen und/oder Anweisungen empfängt bzw. empfangen.

8. Verfahren nach Anspruch 7, **dadurch gekennzeichnet, dass** das Verfahren ein derartiges Betreiben der Serveranordnung (102) umfasst, dass sie über eine oder mehrere Benutzerschnittstellen mit einem oder mehreren Benutzern in Kontakt tritt, damit der eine oder die mehreren Benutzer die eine oder mehreren Heizungen (208a, 208b, 208c) fernsteuern kann bzw. können.

9. Verfahren nach Anspruch 7 oder 8, **dadurch gekennzeichnet, dass** Voreinstellungen der einen oder mehreren Heizungen (208a, 208b, 208c) benutzerdefinierbar sind, wobei die Voreinstellungen dem Fall entsprechen, wenn die eine oder mehreren Heizungen (208a, 208b, 208c) autonom arbeiten.

10. Verfahren nach Anspruch 7, 8 oder 9, **dadurch gekennzeichnet, dass** das Verfahren ein derartiges Einsetzen der autonomen Regelung (310) umfasst, dass mindestens eine der einen oder mehreren Heizungen (208a, 208b, 208c) mit Strom versorgt wird, damit sie nicht einfriert.

11. Verfahren nach Anspruch 7, 8, 9 oder 10, **dadurch gekennzeichnet, dass** das Verfahren ein derartiges Betreiben der Serveranordnung (102) umfasst, dass sie ein oder mehrere Steuerungsgrenzwerte anhand von Folgendem berechnet: eine vom Benutzer eingestellte Solltemperatur, ein haus-/raumbezogenes mathematisches Modell und/oder eine Außenumgebungstemperatur, damit festgelegt wird, wann mindestens eine der einen oder mehreren Heizungen (208a, 208b, 208c) vom Strom getrennt werden soll bzw. sollen.

12. Verfahren nach Anspruch 11, **dadurch gekennzeichnet, dass** die Serveranordnung (102) cloudbasiert ist.

13. Softwareprodukt, das auf einem nicht flüchtigen maschinenlesbaren Datenspeichermedium aufgezeichnet ist, **dadurch gekennzeichnet, dass** das Softwareprodukt zum Ausführen eines Verfahrens nach Anspruch 7 in einem Steuerungssystem nach Anspruch 1 auf Rechenhardware ausführbar ist.

## Revendications

1. Système de commande destiné à la commande d'un ou de plusieurs appareils chauffants électriques (208a, 208b, 302) dans une ou plusieurs maisons (202), dans lequel
le système de commande comporte un agencement de serveur (102) qui est éloigné dans l'espace de l'une ou des plusieurs maisons (202), l'agencement de serveur étant couplé à au moins une unité de commande (214, 312) de l'une ou des plusieurs maisons (202) par le biais d'un réseau de communication (106), **caractérisé en ce que** le ou les plusieurs appareils chauffants (208a, 208b, 302) sont pourvus d'une commande autonome (310) qui est utilisée dans le cas où un ou plusieurs relais de commande (210a, 210b, 304) des appareils chauffants ne reçoit/reçoivent pas de notifications et/ou d'instructions de leur au moins une unité de commande (214, 312) pendant une période de temps réglée après la dernière réception de notifications et/ou d'instructions.

2. Système de commande selon la revendication 1, **caractérisé en ce que** l'agencement de serveur (102) peut être exploité pour communiquer avec un ou plusieurs utilisateurs par le biais d'une ou de plusieurs interfaces utilisateur afin de permettre à l'un ou aux plusieurs utilisateurs de commander à distance l'un ou les plusieurs appareils chauffants.

3. Système de commande selon la revendication 1 ou 2, **caractérisé en ce que** des réglages par défaut de l'un ou des plusieurs appareils chauffants (208a, 208b, 208c) sont définissables par l'utilisateur, les réglages par défaut concernant le cas où l'un ou les plusieurs appareils chauffants fonctionnent de manière autonome.

4. Système de commande selon la revendication 1, 2 ou 3, **caractérisé en ce que** la commande autonome (310) peut être exploitée pour activer l'alimentation d'au moins un de l'un ou des plusieurs appareils chauffants (208a, 208b, 208c) en électricité pour la protection contre le gel.

5. Système de commande selon la revendication 1, 2, 3 ou 4, **caractérisé en ce que** l'agencement de serveur (102) peut être exploité pour calculer une ou plusieurs limites de commande sur la base de : une température cible réglée par l'utilisateur, un modèle mathématique lié à la maison/à une pièce et/ou une température ambiante extérieure et/ou une prédiction de la température ambiante extérieure, afin de déterminer quand stopper l'alimentation en électricité d'au moins un de l'un ou des plusieurs appareils chauffants (208a, 208b, 208c).

6. Système de commande selon la revendication 5, **caractérisé en ce que** l'agencement de serveur (102) est basé sur l'informatique en nuage.

7. Procédé d'utilisation d'un système de commande destiné à la commande d'un ou de plusieurs appareils chauffants électriques (208a, 208b, 208c) dans une ou plusieurs maisons (202), le procédé comportant :
(a) l'utilisation d'un agencement de serveur (102) du système de commande pour commander l'un ou les plusieurs appareils chauffants (208a, 208b, 208c), l'agencement de serveur (102) étant éloigné dans l'espace de l'une ou des plusieurs maisons (202), l'agencement de serveur (102) étant couplé à au moins une unité de commande (214, 312) de l'une ou des plusieurs maisons (202) par le biais d'un réseau de communication (106) ; et
étant **caractérisé en ce que :**
(b) une commande autonome (310) de l'un ou des plusieurs appareils chauffants (208a, 208b, 208c) est utilisée dans le cas où un ou plusieurs relais de commande (210a, 210b, 210c) des appareils chauffants (208a, 208b, 304) ne reçoit/reçoivent pas de notifications et/ou d'instructions de leur au moins une unité de commande (214, 312) pendant une période de temps réglée après la dernière réception de notifications et/ou d'instructions.

8. Procédé selon la revendication 7, **caractérisé en ce que** le procédé comporte l'exploitation de l'agencement de serveur (102) pour communiquer avec un ou plusieurs utilisateurs par le biais d'une ou de plusieurs interfaces utilisateur afin de permettre à l'un ou aux plusieurs utilisateurs de commander à distance l'un ou les plusieurs appareils chauffants (208a, 208b, 208c).

9. Procédé selon la revendication 7 ou 8, **caractérisé en ce que** des réglages par défaut de l'un ou des plusieurs appareils chauffants (208a, 208b, 208c) sont définissables par l'utilisateur, les réglages par défaut concernant le cas où l'un ou les plusieurs appareils chauffants (208a, 208b, 208c) fonctionnent de manière autonome.

10. Procédé selon la revendication 7, 8 ou 9, **caractérisé en ce que** le procédé comporte l'exploitation de la commande autonome (310) pour activer l'alimentation d'au moins un de l'un ou des plusieurs appareils chauffants (208a, 208b, 208c) en électricité pour la protection contre le gel.

11. Procédé selon la revendication 7, 8, 9 ou 10, **caractérisé en ce que** le procédé comporte l'exploitation de l'agencement de serveur (102) pour calculer une ou plusieurs limites de commande sur la base de : une température cible réglée par l'utilisateur, un modèle mathématique lié à la maison/à une pièce et/ou une température ambiante extérieure, afin de déterminer quand stopper l'alimentation en électricité d'au moins un de l'un ou des plusieurs appareils chauffants (208a, 208b, 208c).

12. Procédé selon la revendication 11, **caractérisé en ce que** l'agencement de serveur (102) est basé sur l'informatique en nuage.

13. Produit logiciel enregistré sur un support de mémoire de données non-volatile lisible par une machine, **caractérisé en ce que** le produit logiciel peut être exécuté sur du matériel informatique afin de mettre en oeuvre un procédé selon la revendication 7 sur un système de commande selon la revendication 1.
